# EUROPEAN PATENT SPECIFICATION

(11) **EP 3 392 733 B1**
(45) Date of publication and mention of the grant of the patent: **27.04.2022**
(21) Application number: 16879197.8
(22) Date of filing: 28.11.2016
(51) Int. Cl.: G06F 1/16, H05K 5/02

(54) **ELECTRONIC DEVICE AND FOLDING DEVICE THEREOF**
ELEKTRONISCHE VORRICHTUNG UND FALTVORRICHTUNG DAFÜR
DISPOSITIF ÉLECTRONIQUE ET SON PROCÉDÉ DE PLIAGE

(30) Priority: 23.12.2015 KR 20150184734
(43) Date of publication of application: 24.10.2018
(73) Proprietor: Samsung Electronics Co., Ltd., Suwon-si, Gyeonggi-do 16677 (KR)
(72) Inventor: KIM, Iksang, Seoul 08726 (KR); PARK, Bumsoo, Gwangmyeong-si Gyeonggi-do 14242 (KR)
(74) Representative: HGF
(86) International application number: PCT/KR2016/013747
(87) International publication number: WO 2017/111330

(56) References cited:
- EP-A1- 2 874 043
- EP-A1- 2 887 178
- JP-A- 2008 228 249
- KR-A- 20130 073 331
- KR-A- 20130 073 331
- KR-A- 20140 049 911
- KR-A- 20150 073 410
- KR-A- 20150 135 666
- KR-A- 20150 135 731
- US-B1- 9 164 547

## Description

### Technical Field

Various embodiments of the present disclosure relate to an electronic device and its folding device.

### Background Art

In general, a folding-type electronic device having a large screen display is constructed by physically connecting two bodies using a single mechanical hinge and folding or unfolding one body (e.g. the display) on the other body (a main body).

The hinge employed in the folding-type electronic device is disposed in one of the two bodies to provide a rotation axis. The employed hinge may be provided with a one-axis hinge or a two-axis hinge.

EP 2 887 178 A1 describes an electronic apparatus including first and second device units, at least one hinge assembly configured to pivotally connect the second device unit to the first device unit and including a plurality of shaft members, and a plurality of cover units mounted on the at least one hinge assembly to hide the at least one hinge assembly.

JP 2008 228249 A describes a foldaway mobile phone comprising a hinge mechanism consisting of a chain mechanism for mutually coupling a pair of housings, thin plates penetrating predetermined positions within the chain mechanism which are out of a center axis of the chain mechanism, and a flexible cover member covering a periphery of the chain mechanism. The thin plates have their ends fixed on one housing and the other ends of them, that are configured to have protrudin portions, are inserted into groove portions formed in the base end portions of the housings. On the groove portions a plurality of recessed portions are formed to engage the protruded portions of the thin plates when the pair of housings has a predetermined open angle.

KR 2013 0073331 A describes a hinge module for the smooth bending at a desired angle of a flexible display device, and the stable maintenance of the bent angle. The module includes connection levers including axis holes and guide holes. Guide shafts which are adjacent to both sides of the hinge bodies are inserted into the guide holes. The guide holes have a track which is rotationally the same as the track of the guide shafts when rotating around the upper edges of the hinge bodies. An angle maintaining unit makes the flexible display maintain a bent angle when the hinge bodies relatively rotate about each other and the flexible display is bent.

### Disclosure of Invention

### Technical Problem

However, in a folding-type electronic device having a large screen display, in a folding/unfolding operation, a single mechanical hinge is subject to structural problems of a structural damage and a partial break or damage.

Such a structure may be problematic in slimming the electronic device and places limitations on an exterior design of the hinge.

Various examples of the present disclosure may provide, in a folding-type electronic device having a large screen display, the electronic device which is structurally stable and enables smooth folding/unfolding operations, and a folding device thereof.

Various examples of the present disclosure may provide, in a folding-type electronic device having a large screen display, the electronic device enabling semiautomatic folding/unfolding operations and a folding device thereof.

Various examples of the present disclosure may provide an electronic device of a free exterior design, and a folding device thereof.

Various examples of the present disclosure may provide an electronic device which may dispose a plurality of ports at a back side of a second electronic device connecting portion and slim a first electronic device back portion below the connecting portion, and a folding device thereof.

Various examples of the present disclosure may provide an electronic device including an internal stopper and an external stopper in a folding device, and the folding device thereof.

Various examples of the present disclosure may provide an electronic device which adopts a roll spring as an example of a semiautomatic device, and a folding device thereof.

### Solution to Problem

According to various embodiments of the present invention, an electronic device is provided in accordance with claim 1.

### Advantageous Effects of Invention

Various examples of the present disclosure may stabilize a structure for folding/unfolding a second electronic device, and soften a folding/unfolding operation of the second electronic device.

Various examples of the present disclosure may facilitate a semiautomatic folding/unfolding operation of a second electronic device.

Various examples of the present disclosure may beautify an exterior design.

### Brief Description of Drawings

FIG. 1A is a perspective view showing an upper surface of an electronic device in a folding state.
FIG. 1B is a perspective view showing a lower surface of an electronic device in a folding state.
FIG. 1C and FIG. 1D are perspective views showing an electronic device of an unfolding state.
FIG. 2 is a perspective view enlarging part (a folding device) of an electronic device in a folding state.
FIG. 3A through FIG. 3F are side views sequentially showing operations of a folding device when a second electronic device is unfolded on a first electronic device according to various examples of the present disclosure.
FIG. 4 is a side view showing a folding device of an electronic device of an unfolding state according to various examples of the present disclosure.
FIG. 5 is a plan view showing disposition of a semiautomatic device in an electronic device.
FIG. 6A is a perspective view showing a semiautomatic device of a first position (flat state).
FIG. 6B is a cross-sectional view of a line A-A of FIG. 6A.
FIG. 6C is a cross-sectional view of a line B-B of FIG. 6B.
FIG. 6D is a perspective view showing a semiautomatic device of a second position (rolling state).
FIG. 7A and FIG. 7B is a cross-sectional view showing a mounting state of a semiautomatic device.
FIG. 8A is a perspective view showing a front surface of one folding member according to various examples of the present disclosure.
FIG. 8B is a perspective view enlarging part of FIG. 8A.
FIG. 8C is a perspective view showing a back surface of one folding member according to various examples of the present disclosure
FIG. 8D is a perspective view enlarging part of FIG. 8C.
FIG. 9A and FIG. 9B are perspective views showing part of a folding member which is assembled with a second electronic device according to various examples of the present disclosure.
FIG. 10A and FIG. 10B are cross-sectional views showing part of a folding member which is assembled with a second electronic device according to various examples of the present disclosure.
FIG. 11A is a plan view showing an electronic device according to various examples of the present disclosure.
FIG. 11B is a cross-sectional view taken along a line A'-A 'of FIG. 11A.
FIG. 11C is a cross-sectional view taken along a line B'-B 'of FIG. 11A.
FIG. 12A is a perspective view showing an electronic device according to various examples of the present disclosure.
FIG. 12B is a cross-sectional view of an electronic device according to various examples of the present disclosure.
FIG. 13 is a block diagram of an electronic device according to various examples.

### Best Mode for Carrying out the Invention

Hereinafter, various examples of the present disclosure will be described with reference to accompanying drawings (illustrating examples useful for understanding the present disclosure and claimed invention, but which do not embody the claimed invention as such) .. With regard to description of drawings, similar components may be marked by similar reference numerals.

In the disclosure disclosed herein, the expressions "have," "may have," "include" and "comprise," or "may include" and "may comprise" used herein indicate existence of corresponding features (for example, elements such as numeric values, functions, operations, or components) and do not preclude the presence of additional features.

In the disclosure disclosed herein, the expressions "A or B," "at least one of A or/and B," or "one or more of A or/and B," and the like used herein may include any and all combinations of one or more of the associated listed items. For example, the term "A or B," "at least one of A and B," or "at least one of A or B" may refer to all of the case (1) where at least one A is included, the case (2) where at least one B is included, or the case (3) where both of at least one A and at least one B are included.

The terms, such as "first," "second," and the like used herein, may refer to various elements of various examples of the present disclosure, but do not limit the elements. For example, such terms do not limit the order and/or priority of the elements. Furthermore, such terms may be used to distinguish one element from another element. For example, "a first user device" and "a second user device" indicate different user devices regardless of the order or priority. For example, without departing from the scope of the present disclosure, a first element may be referred to as a second element, and similarly, a second element may be referred to as a first element.

It will be understood that when an element (for example, a first element) is referred to as being "(operatively or communicatively) coupled with/to" or "connected to" another element (for example, a second element), it can be directly coupled with/to or connected to another element or coupled with/to or connected to another element via an intervening element (for example, a third element). In contrast, when an element (for example, a first element) is referred to as being "directly coupled with/to" or "directly connected to" another element (for example, a second element), it should be understood that there is no intervening element (for example, a third element).

According to the situation, the expression "configured to (or set to)" used herein may be used as, for example, the expression "suitable for," "having the capacity to," "designed to," "adapted to," "made to," or "capable of'. The term "configured to (or set to)" must not mean only "specifically designed to" in hardware. Instead, the expression "a device configured to" may mean that the device is "capable of' operating together with another device or other components. For example, a "processor configured to (or set to) perform A, B, and C" may mean a dedicated processor (for example, an embedded processor) for performing a corresponding operation or a generic-purpose processor (for example, a central processing unit (CPU) or an application processor) which may perform corresponding operations by executing one or more software programs which are stored in a memory device.

Terms used in the present disclosure are used to describe specified examples of the present disclosure and are not intended to limit the scope of other examples. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal way, unless expressly so defined herein in various examples of the present disclosure. In some cases, even if terms are terms which are defined in the specification, they may not be interpreted to exclude examples of the present disclosure

An electronic device according to the present disclosure may be a device including a communication function. For example, the electronic device may include at least one of a Smartphone, a tablet personal computer (PC), a mobile phone, a video phone, an electronic book (e-book) reader, a desktop PC, a laptop PC, a netbook computer, a personal digital assistant (PDA), a portable multimedia player (PMP), an MP3 player, a mobile medical appliance, a camera, and a wearable device (e.g. a head-mounted-device, such as electronic glasses, electronic clothes, an electronic bracelet, an electronic necklace, an electronic appcessory, electronic tattoos, or a smartwatch).

The electronic device may also be a smart home appliance with a communication function such as a television, a digital versatile disk (DVD) player, an audio, a refrigerator, an air conditioner, a vacuum cleaner, an oven, a microwave oven, a washing machine, an air cleaner, a set-top box, a TV box (e.g., Samsung HomeSyncTM, Apple TVTM, or Google TVTM), a game console, an electronic dictionary, an electronic key, a camcorder, and an electronic photo frame.

The electronic device may also include at least one of various medical appliances (e.g., magnetic resonance angiography (MRA), magnetic resonance imaging (MRI), computed tomography (CT), and ultrasonic machines), navigation equipment, a global positioning system (GPS) receiver, an event data recorder (EDR), a flight data recorder (FDR), automotive infotainment device, electronic equipment for ships (e.g., ship navigation equipment and a gyrocompass), avionics, security equipment, a vehicle head unit, an industrial or home robot, an automatic teller machine (ATM), and a point of sale (POS) device.

The electronic device may also include at least one of a part of furniture or a building/structure, an electronic board, an electronic signature receiving device, a projector, and various kinds of measuring instruments (e.g., a water meter, an electric meter, a gas meter, and a radio wave meter). Further, the electronic device may be a flexible device. The electronic device may also be a combination of one or more of the aforementioned various devices. Further, it will be apparent to those skilled in the art that the electronic device, according to the present disclosure, is not limited to the aforementioned devices.

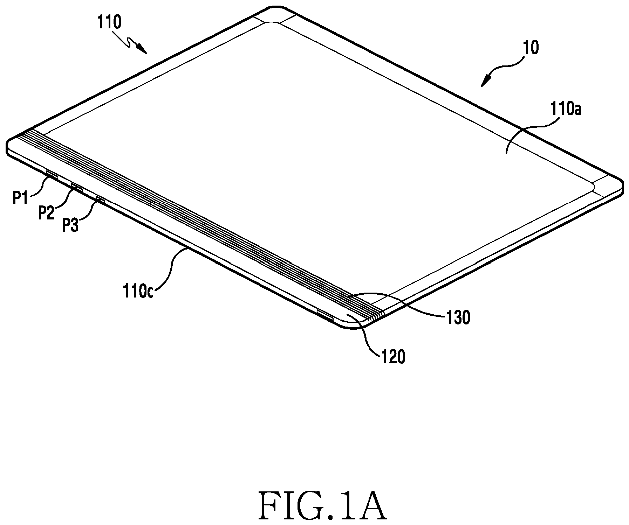

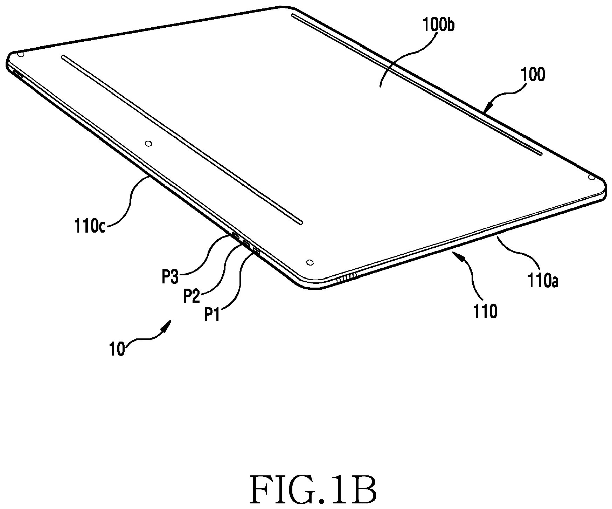

Referring to FIG. 1A through FIG. 1D, an electronic device 10 according to various includes a first electronic device 100, a second electronic device 110, a connecting portion 120, and a folding portion 130. For example, the first electronic device 100 may be referred to as a first main body, a first housing, a first function device, an input device, and so on. For example, the second electronic device 110 may be referred to as a second main body, a second housing, a second function device, a display, and so on.

The electronic device 100 includes an inner surface 100a, and an outer surface 100b which is opposite to the inner surface 100a. The electronic device 100 according to various examples may include at least one or more input devices. For example, the input devices of the first electronic device 100 may include a plurality of keys 101a, and an input pad 102.

The second electronic device 110 according to various examples may include a display 111. The display 111 may be configured as a touch screen, by including a touch panel. For example, the display 111 may be of a size to occupy most of an inner surface 110b of the second electronic device 110. For example, although not depicted in the drawing, devices such as at least one or more sensors (not shown) or a camera (not shown) may be disposed in a non-display region excluding the display 110, in the second electronic device inner surface 110b.

The connecting portion 120 according to various examples may be provided by combining a rear peripheral portion of the first electronic device 110 and a rear peripheral portion of the second electronic device 110.

The second electronic device 110 includes a folding portion 130, and thus may be folded or unfolded on the first electronic device 100. The folding portion 130 according to various examples may be disposed near the connecting portion 120. The structure of the folding portion 130 shall be explained in detail. The folding portion 130 according to various examples may be disposed in the non-display region of the second electronic device 110, and is disposed in parallel with the connecting portion 120.

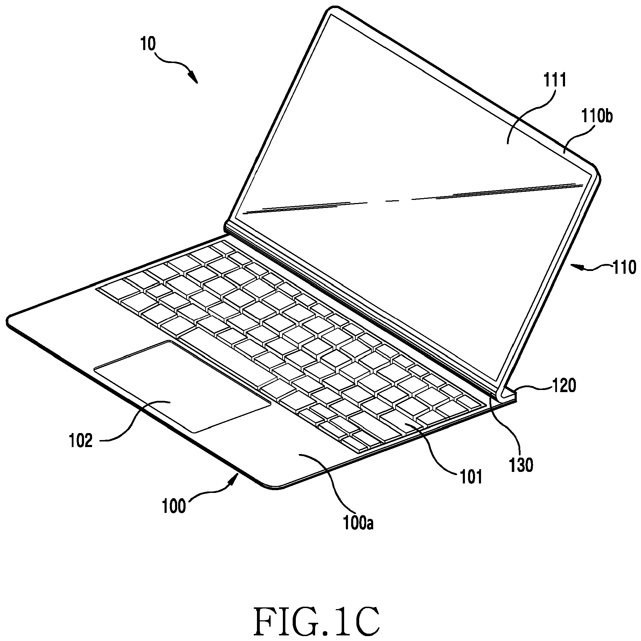

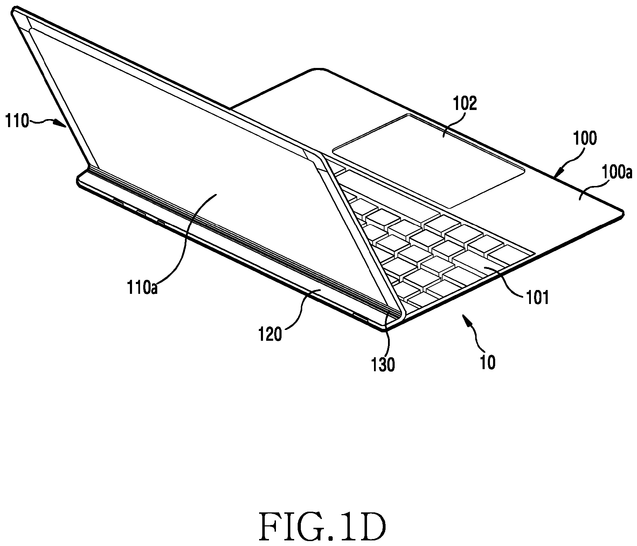

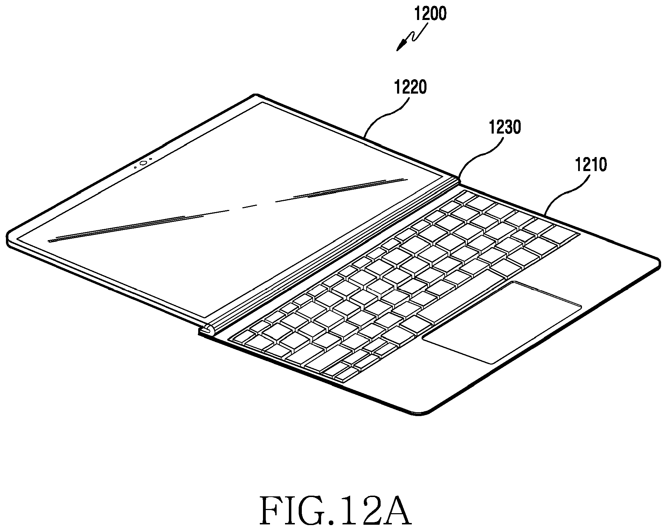

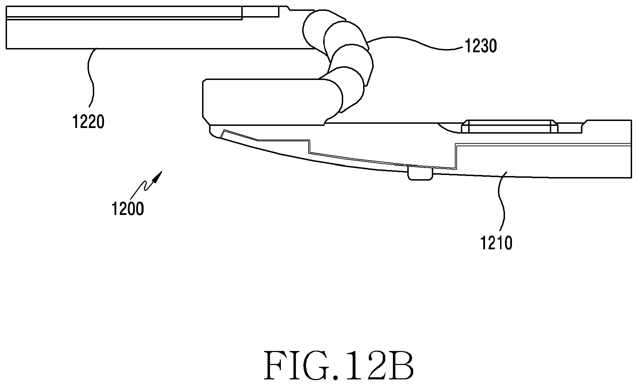

The second electronic device 110 according to various examples may be opened on the first electronic device 100 from 135 degrees to 180 degrees. For example, the second electronic device 110 of FIG. 1C and FIG. 1D is opened on the first electronic device 100 up to 135 degrees, and the second electronic device 110 of FIG. 12A and FIG. 12B is opened up to 180 degrees.

The folding portion 130 according to various examples may be disposed at a position of approximately 6 ~ 7 % (about 10 ∼ 20 mm) based on a rear side surface, in a longitudinal side of the second electronic device, and thus prevent the electronic device 10 of an unfolding state from falling backward.

The folding portion 130 according to various examples may be configured by combining a plurality of folding members. The folding members according to various examples may be closely coupled to provide a folding axis of the second electronic device 110. The folding portion shall be described in further detail.

The display 111 disposed in the second electronic device inner surface 110b according to various examples may serve as a touch screen. Hereafter, the display is referred to as the touch screen.

The inner surface 110b of the second electronic device 110 according to various examples may include the touch screen 111. The touch screen 111 may be formed large to occupy most of the inner surface 110b of the second electronic device 110. The touch screen 111 may be mounted in the first electronic device inner surface 110b, or the second electronic device outer surface 110a.

The touch screen 111 according to various examples may display a main home screen. The main home screen may be the first screen displayed on the touch screen 111 when the electronic device 10 is turned on. If the electronic device 10 includes different home screens of several pages, the main home screen may be the first home screen of the home screens of multiple pages. The home screen may display shortcut icons for executing applications frequently used, a main menu switch key, time, weather, and so on. The main menu switch key may display a menu screen on the touch screen 111.

At the top of the touch screen 111 according to various examples, a status bar which displays device states such as a battery charging state, a received signal strength, and current time may be formed. A home button, a menu button, and a back button may be formed at the bottom of the touch screen 111.

The home button may display the main home screen on the touch screen 111. For example, if the home key is touched while the touch screen 111 displays a different home screen from the main home screen, or the menu screen, the touch screen 111 may display the main home screen. For example, if the home key is touched while applications are executed on the touch screen 111, the touch screen 111 may display the main home screen. The home button may be used to display applications recently used or to display a task manager, on the touch screen 111.

The menu button provides a connection menu available on the touch screen 111. The connection menu may include a widget add menu, a wallpaper change menu, a search menu, an edit menu, a settings menu, and so on. The back button may display a previous screen of the current screen, or terminate the application used most recently.

A front-facing camera, an illuminance sensor, and a proximity sensor may be disposed on edges of the inner surface 110 of the second electronic device 110, for example, in the non-display region. A rear-facing camera, a flash, and a speaker may be disposed in the outer surface 110a of the second electronic device 110. For example, a plurality of ports P1, P2, and P3 may be disposed in a rear side surface 110c of the second electronic device 110 according to various examples.

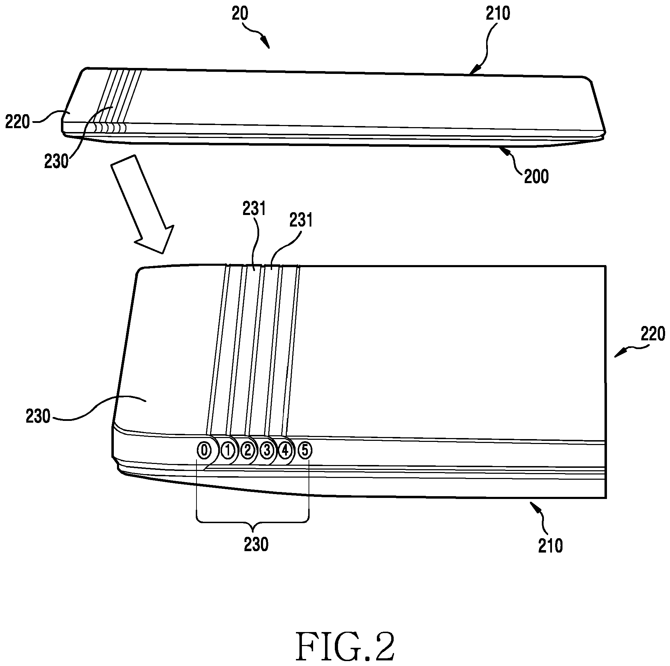

Referring to FIG. 2, an electronic device 20 according to various examples may be the same electronic device as the electronic device 10 of FIG. 1A through FIG. ID. The electronic device 20 according to various examples may include first and second electronic devices 220 and 210, a connecting portion 220, and a folding portion 230. The first electronic device 200 according to various examples may be a main body portion, and the second 210 may be a folding/unfolding portion.

The connecting portion 220 according to various examples electrically and physically connects the first and second electronic devices 220 and 210, and may be a rear peripheral portion of the second electronic device 210. The connecting portion 220 according to various examples may be extended along the rear periphery of the second electronic device 210, and a plurality of connectors (ports) may be disposed.

An exterior of the connecting portion 220 of the second electronic device 210 according to various examples may be a synthetic resin material, the folding portion 230 may be a metallic material, and other outer exterior of the second electronic device 210 may be a metallic material.

As aforementioned, the disposition position of the folding portion 230 according to various examples may be disposed at the position of approximately 6 ~ 7 % (about 10 ~ 20 mm) on the rear side, between front and rear surfaces, in the longitudinal side of the second electronic device 210, and thus prevent the electronic device 20 of the unfolding state from falling backward.

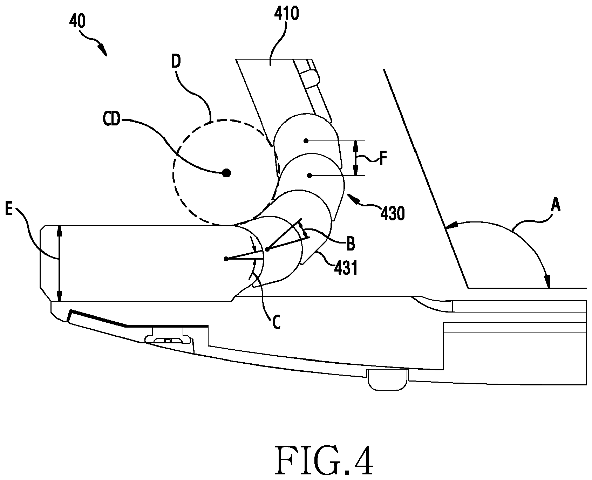

The folding portion 230 is configured by combining a plurality of folding members 231. The folding members 231 according to various examples may be closely coupled to provide a folding axis (FIG. 4) of the second electronic device 210.

The folding members 231 according to various examples may be seen on the side surface and the outer surface of the second electronic device 210. The folding portion 230 according to various examples may be disposed in parallel with the connecting portion 220.

Since the plurality of the ports is disposed in the connecting portion 220 of the second electronic device 210, a rear portion of the first electronic device 200 according to various examples may be slim, compared with the prior art.

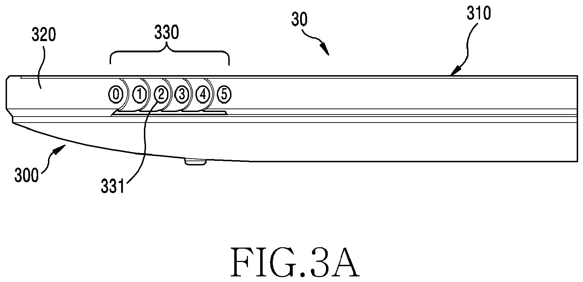

Referring to FIG. 3A through 3F, an electronic device 30 according to various examples may be the same electronic device as the electronic device 10 of FIG. 1A through ID.

A folding portion 330 adopted to a second electronic device 310 according to various examples may fold/unfold the second electronic device 310 by distributing an angle per folding member 331 in consideration of an unfolding angle of the second electronic device 310.

FIG. 3A is a diagram showing a folding state of the second electronic device 310 on the first electronic device 300. In this state, the folding portion 330 may be in a flat state. The plurality of the folding members 331 may be in the flat state in close contact with each other.

Among the folding members 331 according to various examples, the zero-th member may be a folding member integrally fixed to a second electronic device connecting portion. The fifth member may be a folding member integrally fixed to the remaining portion of the second electronic device. The first through fourth folding members may be manufactured independently and combined together, to construct the folding portion.

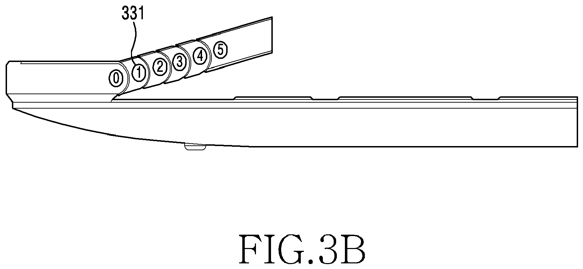

For example, if the rotation angle per first through fourth folding member 331 is designed as 28 degrees and the zero-th and fifth folding members are designed as 14 degrees, FIG. 3B shows that the first folding member 331 is folded at 14 degrees on the zero-th folding member 331. The first folding member 331 may not be further folded. This may be due to a stopper to be explained.

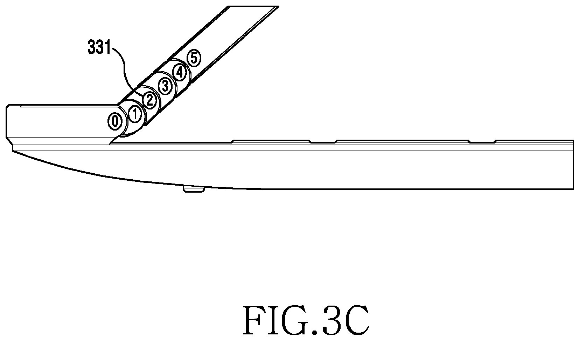

FIG. 3C shows that the second folding member 331 is folded at 28 degrees on the first folding member 331. The second folding member 331 may not be further folded. This may be due to the stopper to be explained.

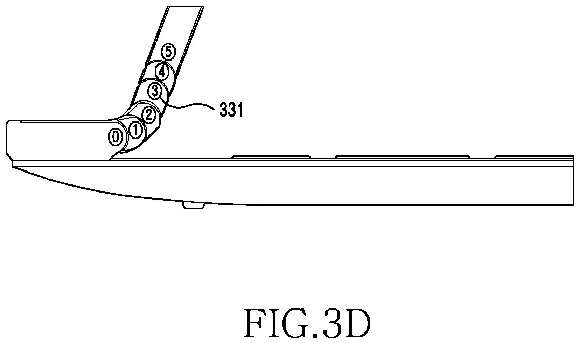

FIG. 3D shows that the third folding member 331 is folded at 28 degrees on the second folding member 331. The third folding member 331 may not be further folded. This may be due to the stopper to be explained.

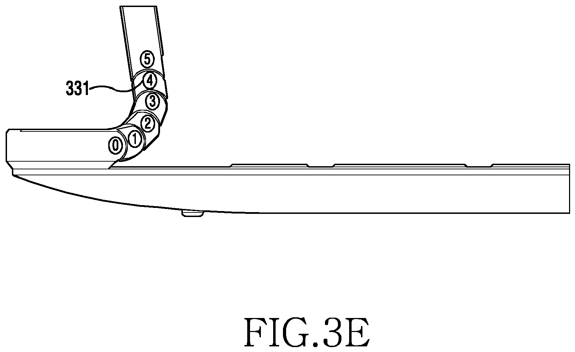

FIG. 3E shows that the fourth folding member 331 is folded at 28 degrees on the third folding member 331. The fourth folding member 331 may not be further folded. This may be due to the stopper to be explained.

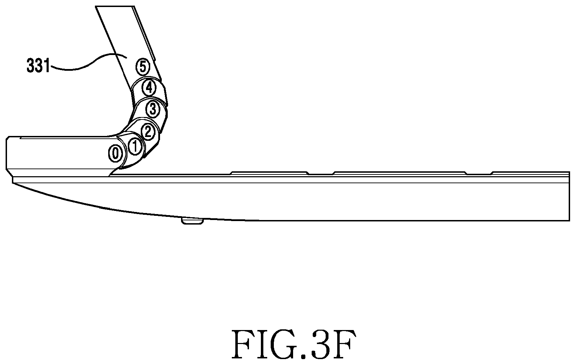

FIG. 3F shows that the fifth folding member 331 is folded at 14 degrees on the fourth folding member 331. The fifth folding member 331 may not be further folded. This may be due to the stopper to be explained.

Referring to FIG. 4, an electronic device 40 according to various examples may be the same electronic device as the electronic device 10 of FIG. 1A through ID.

The electronic device 40 according to various examples may design a folding member 431 of a folding portion 430, by considering a folding angle of a second electronic device 410.

In the electronic device 40 according to various examples, assuming that an unfolding angle of the second electronic device 410 is A and a folding angle (rotation angle) of each folding member 431 is B, B may be defined as A/the number of the folding members 431. However, if the C is the folding angle of first (zero-th) and last (fifth) folding members 431, C = B/2 may be defined.

For example, if the unfolding angle of the second electronic device 410 is 135 degrees and the number of the folding members 431 is five, B = 135/5 and the value B is 27 degrees. That is, if the first through fourth folding members 431 (see FIG. 3A through FIG. 3F) are designed to rotate about 27 degrees and the zero-th and fifth folding members 431 (see FIG. 3A through FIG. 3F) are designed to rotate 13.5 degrees, the unfolding angle of the second electronic device 410 may stop at about 135 degrees.

D is a curved surface formed according to the unfolding operation of the second electronic device 410, and the D value is related to the number of the articulated folding members 431 and may change according to an inner diameter of a roll spring, to be explained. As the length D increases, a spacing F may increase, the entire area of the folding member 431 may increase, or the number of the articulated folding members 431 may increase. CP is the center of D.

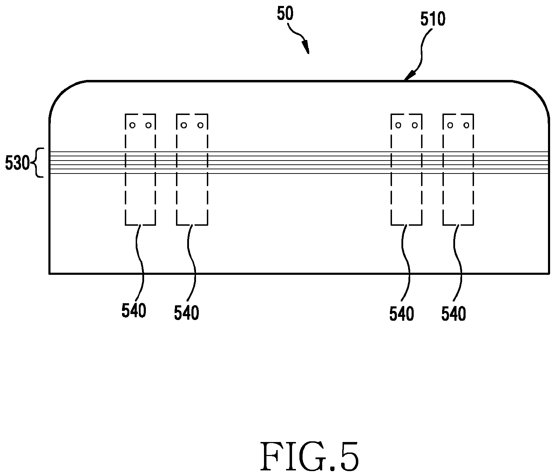

Referring to FIG. 5, an electronic device 50 according to various examples may be the same electronic device as the electronic device 10 of FIG. 1A through ID.

The electronic device 50 according to various examples may include a semiautomatic device 540 which, when a second electronic device 510 performs a folding operation or an unfolding operation on a first electronic device, provides a folding force or an unfolding force of the second electronic device 510. The semiautomatic device 540 may include an elastic body. The semiautomatic may mean that, if a user provides an initial force and applies the force over a certain level, remaining deformation is made automatically without user's force. Also, the electronic device 50 of the folding state may indicate that the second electronic device 510 is closed on the first electronic device, and the electronic device 50 of the unfolding state may indicate that the second electronic device 510 is inclined on the first electronic device at the angle approximately between 135 degrees and 180 degrees.

The second electronic device 510 further includes at least one or more semiautomatic devices 540 which provide the folding force or the unfolding force of the second electronic device. In the folding/unfolding operation of the second electronic device 510, the semiautomatic device 540 may conduct the folding or unfolding operation with the second electronic device 510.

The semiautomatic device 540 according to various examples may be disposed to penetrate a folding portion 530 of the second electronic device 510, and at least one or more may be disposed along the folding portion 530. For example, at least one or more semiautomatic devices 540 may be disposed in a vertical direction of the disposition direction of the folding portion 530, and at least one or more may be disposed at a right angle to the disposition direction of the folding portion 530. For example, at least one or more pairs of the semiautomatic devices 540 may be disposed in the vertical direction of the disposition direction of the folding portion 530, and symmetrically.

The semiautomatic device 540 includes a plurality of roll springs. Hereafter, the semiautomatic device 540 is referred to as the roll spring.

The roll spring 540 may be disposed to face in the vertical direction along a longitudinal direction of the folding portion 530.

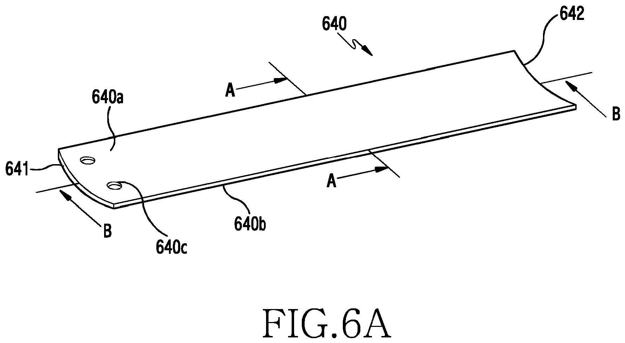

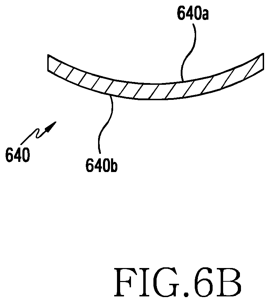

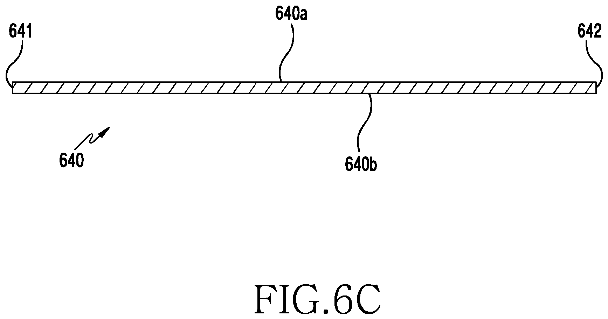

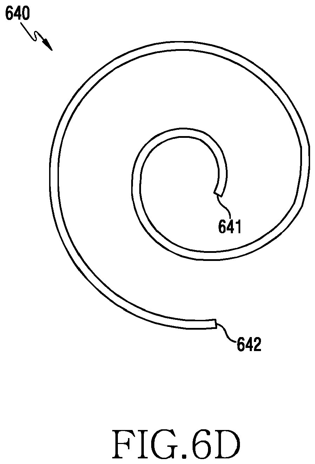

Referring to FIG. 6A through 6D, a roll spring 640 according to various examples is a thin plate, and may include a metal plate. The roll spring 640 is manufactured in a shape having a curvature, and has a first position (FIG. 6A) or a second position (FIG. 6D). The first position is a position where the roll spring 640 is disposed substantially flat, and semi-automatically provides the folding force of the second electronic device. The second position is a position where the roll spring 640 is disposed substantially in a rolling shape, and semi-automatically provides the unfolding force of the second electronic device.

Each roll spring 640 according to various examples may include one end 641 which is a fixed end, and the other end 642 which is a free end. For example, the one end 641 of the roll spring may be fixed to the second electronic device using a fastener which is not shown, and the other end 642 may be disposed to penetrate a folding portion. The roll spring one end 641 according to various examples may be fixed to a connecting portion, or fastened by the fastener between the connecting portion and the folding portion.

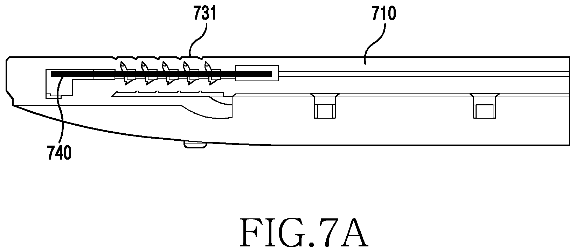

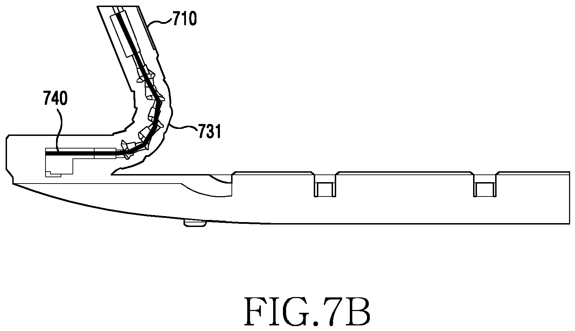

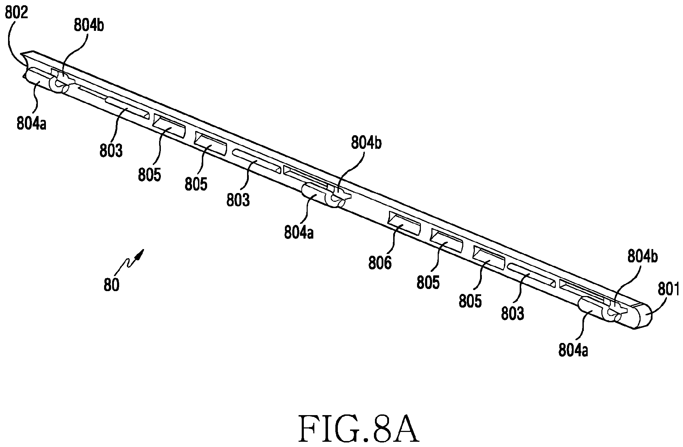

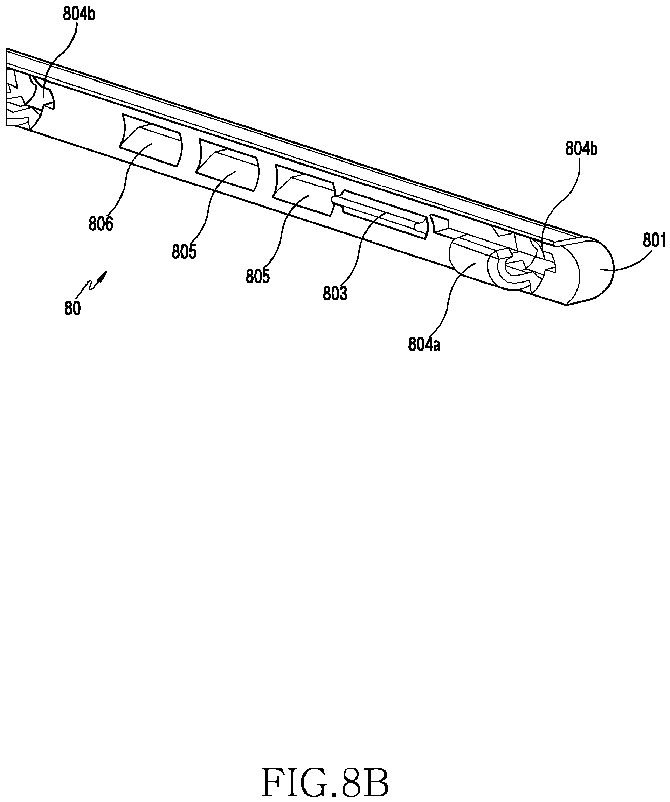

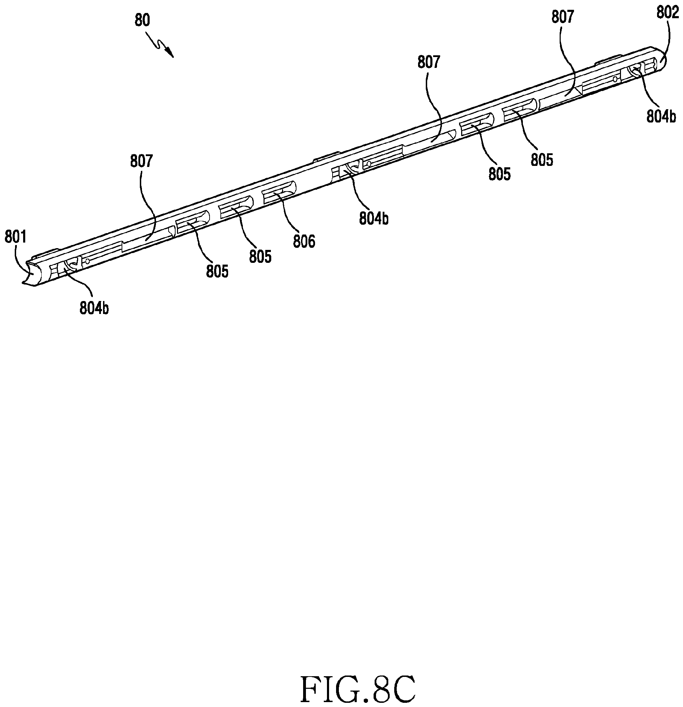

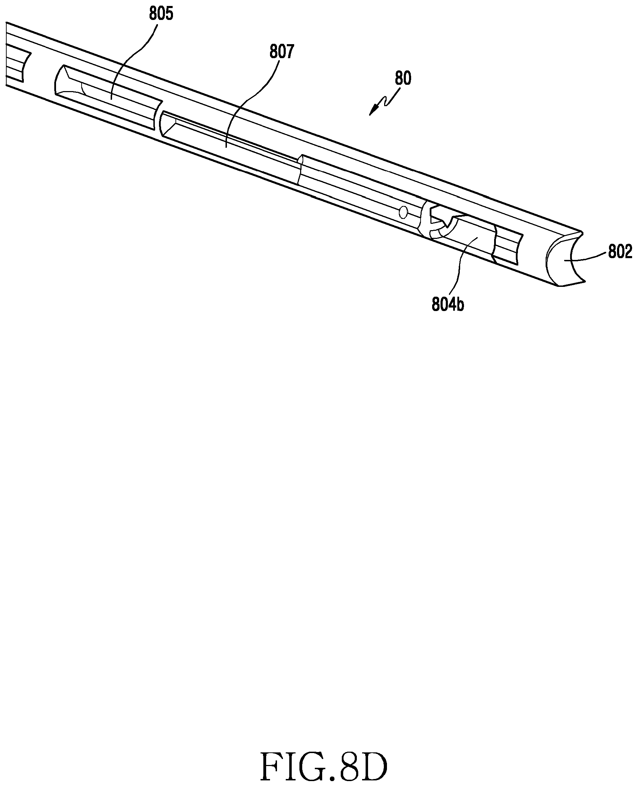

Referring to FIG. 7A and FIG. 7B, a roll spring 740 is disposed to penetrate a plurality of folding members 731. Each roll spring one end is fixed and the other end is disposed to penetrate each folding member, to thus semi-automatically provide a folding force or an unfolding force of the second electronic device. The folding member 731 of the folding portion, to be explained, includes an opening (FIG. 8A), and accordingly the roll spring 740 may be disposed to penetrate the folding member 731 and interwork with the folding member 731.

Referring to FIG. 8A through FIG. 8D, a folding portion according to various examples may be configured using articulated coupling between a plurality of folding members 980. Each of the folding members 80 according to various examples may include one end 801, the other end 802, at least one or more stoppers 803, at least one or more interworking grooves 807, at least one or more locking structures 804a and 804b, and at least one or more openings 805 and 806.

The folding member 80 according to various examples may include one end 801 and the other end 802 which are exposed to outside. The one end 801 and the other end 802 of the folding member may be exposed to outside, and have a part in exterior of at least part of the electronic device. The one end and the other end of the folding member according to various examples may interwork with other neighboring folding member and thus serve as a first stopper of the folding portion. The folding operation of the folding member has been described in FIG. 3A through FIG. 3F and thus shall be omitted.

The folding member 80 according to various examples may include at least one or more stoppers 803. If the one end 801 and the other end 802 are a first stopper, the stopper 803 may be referred to as a second stopper. The second stopper 803 according to various examples may be extended in the longitudinal direction of the folding member 80 and configured in a protrusion shape.

The folding member 80 according to various examples may include at least one or more interworking grooves 807. The interworking groove 807 according to various examples may interwork with the stopper 803 and prevent excessive rotation of the folding member 80.

Each of the folding members 80 according to various examples may include at least one or more openings 805 and 806. The openings according to various examples may be formed to be spaced apart along the longitudinal direction of the folding member 80. Functions of the opening according to various examples may be divided into two, the opening 805 which the roll spring passes through and the opening 806 which a flexible printed circuit board which is not shown passes through.

The folding member 80 according to various examples may include at least one or more locking structures 804a and 804b. At least one or more locking structures 804a and 804b according to various examples may be formed in the longitudinal direction of the folding member 80. Each of the locking structures 804a and 804b may be provided by combining neighboring folding members 80. Each locking structure may be completed by coupling the locking protrusion 804a and the locking opening 804b. Each locking protrusion 804a may be coupled with its neighboring locking opening of one side to complete the locking structure, and each locking opening 804b may be coupled with its neighboring locking protrusion of the other side to complete the locking structure.

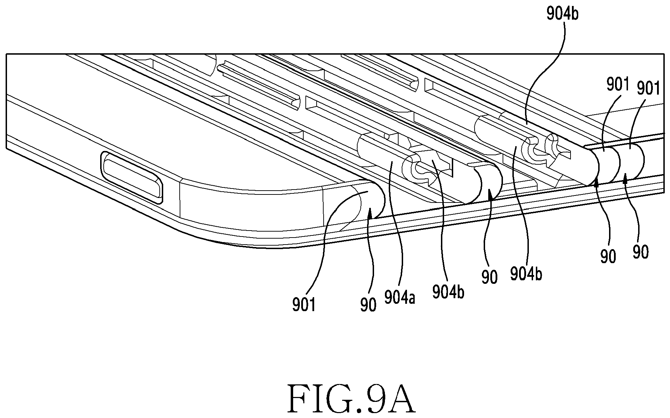

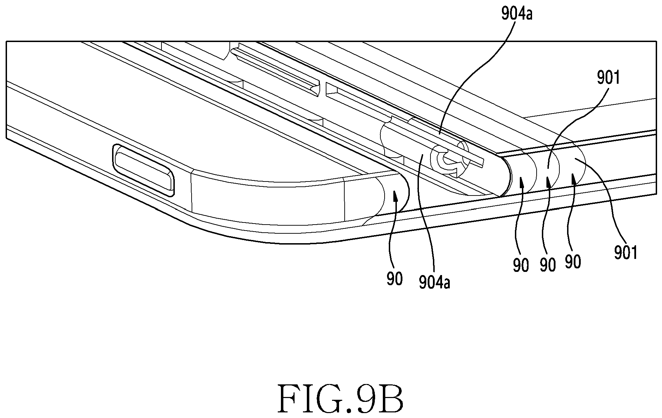

The locking structure of the folding member according to various examples is shown in FIG. 9A and FIG. 9B.

Referring to FIG. 9A and FIG. 9B, a folding member 90 according to various examples may be coupled with a neighboring folding member 90 disposed on one side, and coupled with a neighboring folding member 90 disposed on the other side. A locking opening 904b of the folding member according to various examples may be coupled with a locking protrusion 904a of the neighboring folding member on one side, and the locking protrusion 904a of the folding member according to various examples may be coupled with the locking opening 904b of the neighboring folding member on the other side.

A folding member one end 901 according to various examples may be closely coupled with one end 901 of a neighboring folding member on one side, and coupled with one end 901 of a neighboring folding member on the other side. Although not depicted, the other end of the folding member 80 according to various examples may be closely coupled with the other end of the neighboring folding member on one side, and coupled with the other end of the neighboring folding member on the other side.

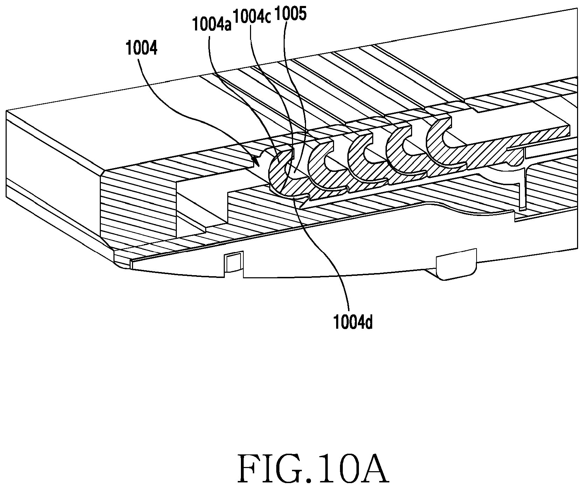

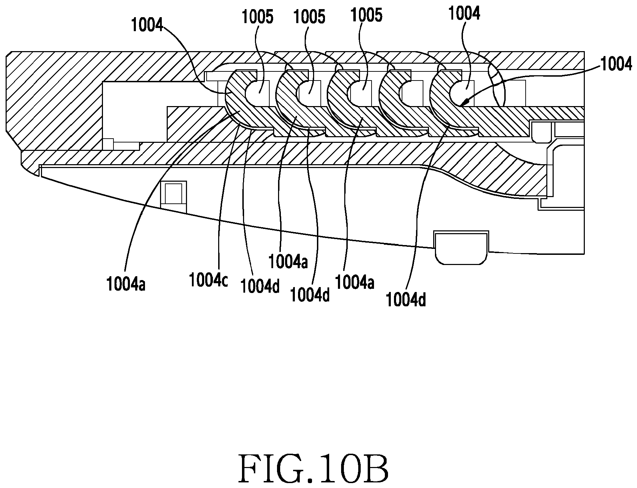

Referring to FIG. 10A and FIG. 10B, each folding member 1004 according to various examples may be the same folding member as the folding member 80 of FIG. 8A through FIG. 8D. The folding members 1004 according to various examples may be folded in the coupled state, and rotate substantially certain degrees. For doing so, each locking protrusion 1004a of each folding member 1004 may cut part of its end portion, in order to avoid interference of the folding operation and the rotating operation.

A locking protrusion outer surface 1004c of each folding member according to various examples may rotate and fold in close contact with a support surface 1004d of the neighboring folding member on one side, and rotate and fold in close contact with an outer surface 1004c of the neighboring folding member on the other side of the protrusion support surface 1004d of each folding member.

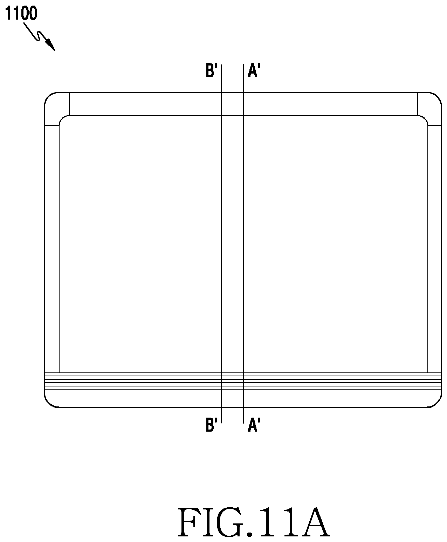

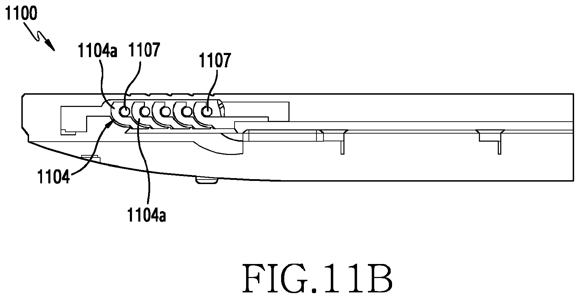

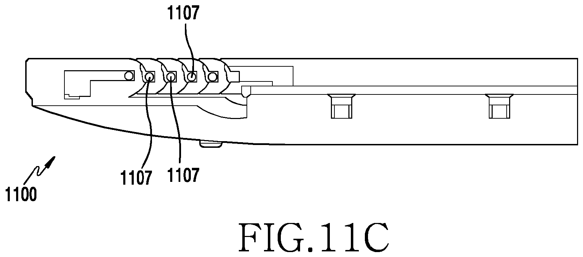

If the folding members 1004 according to various examples are coupled, a certain space 1005 may be provided between the locking protrusions 1004a. The provided space 1005 of a certain shape is an opening of a tunnel shape, and a fixing pin may be inserted into each space 1005. The state where the fixing pin is inserted into the provided space 1005 is shown in FIG. 11A through FIG. 11C.

Referring to FIG. 11A through FIG. 11C, an electronic device 1100 according to various examples may be the same electronic device as the electronic device 10 of FIG. 1A through ID. Each folding member 1004 according to various examples may be the same folding member as the folding member 80 of FIG. 8A through FIG. 8D.

The electronic device 1100 according to various examples may insert each fixing pin 1107 into a space provided between locking projections 1104a of folding members 1104. The fixing pin 1107 according to various examples may include a metallic material, and may be of a shape extending linearly, as a cylindrical shape having a radius. The fixing pin 1107 according to various examples may be disposed from vicinity of one end to vicinity of the other end, and thus become a substantial rotation axis of a limited rotation operation of the folding members 1104. Due to each fixing pin 1107, each folding member 1104 may be restrained without escaping.

The fixing pins 1107 inserted in the provided spaces may be unfolded or folded again, substantially in parallel at equal intervals. For example, the fixing pin 1107, which provides the rotation axis, may be referred to as a hinge pin.

Referring to FIG. 12A and FIG. 12B, an electronic device 1200 according to various examples may be the same electronic device as the electronic device 10 of FIG. 1A through ID.

A second electronic device 1220 according to various examples may be unfolded on a first electronic device 1210 substantially up to 180 degrees, thanks to a folding portion 1230.

The electronic device 1200 according to various examples may adjust the opening and closing angle according to shapes of both ends disposed on an exterior of a folding member of a folding portion, a shape of a stopper of the folding member, and the number of folding members. For example, as the number of the folding members increases, the folding portion according to various examples may be opened more.

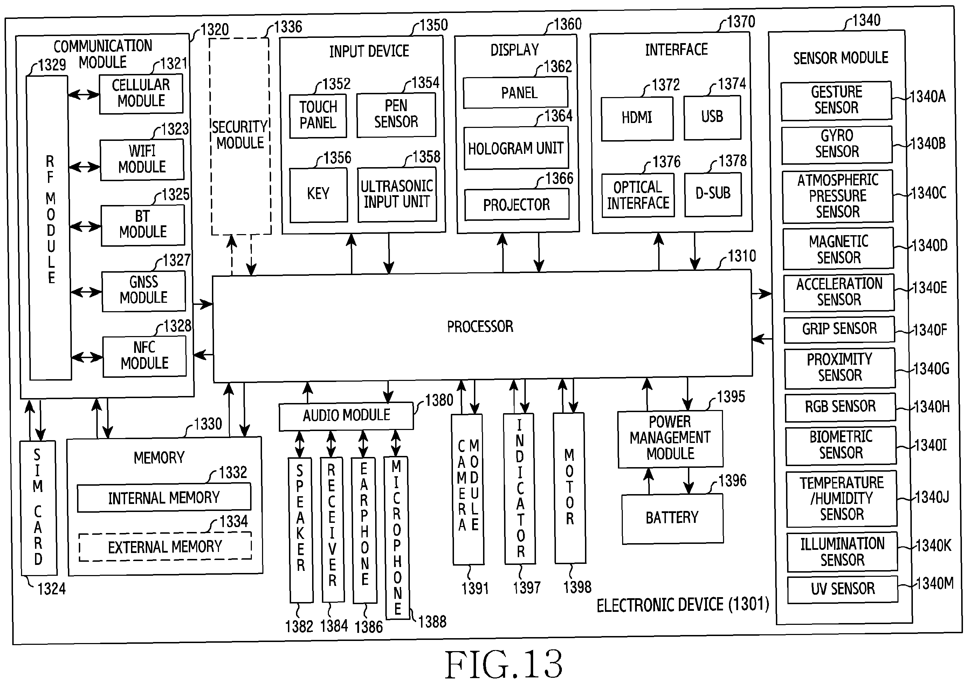

FIG. 13 is a block diagram 1301 of an electronic device 1300 according to various examples. An electronic device 1301 according to various examples may be the same electronic device as the electronic device of FIG. 1A through ID.

The electronic device 1301 according to various examples may include at least one AP 1310, a communication module 1320, a subscriber identification module (SIM) card 1329, a memory 1330, a sensor module 1340, an input device 1350, a display 1360, an interface 1370, an audio module 1380, a camera module 1391, a power management module 1395, a battery 1396, an indicator 1397, and a motor 1398.

The processor 1310 may control a plurality of hardware or software components connected to the processor 1310 by driving an OS or an application program and perform processing of various pieces of data and calculations. The processor 1310 may be implemented by, for example, a system on chip (SoC). According to an example of the present disclosure, the processor 1310 may further include a graphics processing unit (GPU) and/or an image signal processor (ISP). The processor 1310 may include at least some (e.g., a cellular module 1321) of the elements illustrated in FIG. 13. The processor 1310 may load, into a volatile memory, instructions or data received from at least one (e.g., a non-volatile memory) of the other elements and may process the loaded instructions or data, and may store various data in a non-volatile memory.

The communication module 1320 may include, for example, the cellular module 1321, a Wi-Fi module 1323, a Bluetooth module 1325, a GNSS module 1327 (e.g., a GPS module, a Glonass module, a Beidou module, or a Galileo module), an NFC module 1328, and a radio frequency (RF) module 1329.

The cellular module 1321 may provide a voice call, image call, a text message service, or an Internet service through, for example, a communication network. According to an example of the present disclosure, the cellular module 1321 may distinguish between and authenticate electronic devices 1301 within a communication network using a subscriber identification module (e.g., the SIM card 1324). According to an example of the present disclosure, the cellular module 1321 may perform at least some of the functions that the processor 1310 may provide. According to an example of the present disclosure, the cellular module 1321 may include a CP.

Each of the Wi-Fi module 1323, the BT module 1325, the GNSS module 1327, and the NFC module 1328 may include, for example, a processor for processing data transmitted and received through the relevant module. According to various examples of the present disclosure, at least some (e.g., two or more) of the cellular module 1321, the Wi-Fi module 1323, the BT module 1325, the GNSS module 1327, and the NFC module 1328 may be included in one integrated chip (IC) or IC package.

The RF module 1329 may transmit/receive, for example, a communication signal (e.g., an RF signal). The RF module 1329 may include, for example, a transceiver, a power amp module (PAM), a frequency filter, a low noise amplifier (LNA), and/or an antenna. According to another example of the present disclosure, at least one of the cellular module 1321, the Wi-Fi module 1323, the Bluetooth module 1325, the GNSS module 1327, or the NFC module 1328 may transmit and receive RF signals through a separate RF module(s).

The subscriber identification module card 1324 may include, for example, a card including a subscriber identity module and/or an embedded SIM, and may contain unique identification information (e.g., an integrated circuit card identifier (ICCID)) or subscriber information (e.g., an international mobile subscriber identity (IMSI)).

The memory 1330 (e.g., the memory 1830) may include, for example, an internal memory 1332 or an external memory 1334. The internal memory 1332 may include at least one of, for example, a volatile memory (e.g., a dynamic random access memory (DRAM), a static RAM (SRAM), a synchronous dynamic RAM (SDRAM), and the like) and a non-volatile memory (e.g., a one time programmable read only memory (OTPROM), a programmable ROM (PROM), an erasable and programmable ROM (EPROM), an electrically erasable and programmable ROM (EEPROM), a flash memory (e.g., a NAND flash memory or a NOR flash memory), a hard driver, or a solid state drive (SSD).

An external memory 1334 may further include a flash drive, for example, a compact flash (CF), a secure digital (SD), a Micro-SD, a Mini-SD, an extreme digital (xD), a multimedia card (MMC), a memory stick, and the like. The external memory 1334 may be functionally and/or physically connected to the electronic device 1301 through various interfaces.

The sensor module 1340 may measure a physical quantity or detect an operation state of the electronic device 1301, and may convert the measured or detected information into an electrical signal. The sensor module 1340 may include, for example, at least one of a gesture sensor 1340A, a gyro sensor 1340B, an atmospheric pressure sensor 1340C, a magnetic sensor 1340D, an acceleration sensor 1340E, a grip sensor 1340F, a proximity sensor 1340G, a color sensor 1340H (e.g., a red, green, blue (RGB) sensor), a biometric sensor 13401, a temperature/humidity sensor 1340J, a light sensor 1340K, and a ultraviolet (UV) sensor 1340M. Additionally or alternatively, the sensor module 1340 may include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 1340 may further include a control circuit for controlling one or more sensors included therein. In various examples of the present disclosure, an electronic device 1301 may further include a processor configured to control the sensor module 1340 as a part of or separately from the processor 1310, and may control the sensor module 1340 while the processor 1310 is in a sleep state.

The input device 1350 may include, for example, a touch panel 1352, a (digital) pen sensor 1354, a key 1356, or an ultrasonic input device 1358. The touch panel 1352 may use at least one of, for example, a capacitive scheme, a resistive scheme, an infrared scheme, and an ultrasonic scheme. In addition, the touch panel 1352 may further include a control circuit. The touch panel 1352 may further include a tactile layer and provide a tactile reaction to the user.

The (digital) pen sensor 1354 may include, for example, a recognition sheet which is a part of the touch panel or is separated from the touch panel. The key 1356 may include, for example, a physical button, an optical key, a keypad, and the like. The ultrasonic input device 1358 may detect ultrasonic wave generated by an input tool through a microphone (e.g., a microphone 1388) and identify data corresponding to the detected ultrasonic waves.

The display 1360 may include a panel 1362, a hologram device 1364, or a projector 1366. The panel 1362 may be implemented to be, for example, flexible, transparent, or wearable. The panel 1362 and the touch panel 1352 may be configured by one module. The hologram device 1364 may show a three dimensional image in the air by using an interference of light. The projector 1366 may display an image by projecting light onto a screen. The screen may be located, for example, inside or outside the electronic device 1301. According to an example of the present disclosure, the display 1360 may further include a control circuit for controlling the panel 1362, the hologram device 1364, or the projector 1366.

The interface 1370 may include, for example, an HDMI 1372, a USB 1374, an optical interface 1376, or a D-subminiature (D-sub) 1378. The interface 1370 may include, for example, a mobile high-definition link (MHL) interface, a SD card/ MMC interface, or an infrared data association (IrDA) standard interface.

The audio module 1380 may bilaterally convert, for example, a sound and an electrical signal. The audio module 1380 may process sound information which is input or output through, for example, a speaker 1382, a receiver 1384, earphones 1386, the microphone 1388, and the like.

The camera module 1391 is a device which may photograph a still image and a dynamic image. According to an example of the present disclosure, the camera module 1391 may include one or more image sensors (e.g., a front sensor or a back sensor), a lens, an ISP or a flash (e.g., an LED or a xenon lamp).

The power management module 1395 may manage, for example, power of the electronic device 1301. According to an example of the present disclosure, the power management module 1395 may include a power management integrated circuit (PMIC), a charger integrated circuit (IC), or a battery or fuel gauge. The PMIC may use a wired and/or wireless charging method. Examples of the wireless charging method may include, for example, a magnetic resonance method, a magnetic induction method, an electromagnetic method, and the like, and may further include additional circuits (e.g., a coil loop, a resonance circuit, a rectifier, and the like) for wireless charging. The battery gauge may measure, for example, a residual quantity of the battery 1396, and a voltage, a current, or a temperature during the charging. The battery 1396 may include, for example, a rechargeable battery or a solar battery.

The indicator 1397 may indicate a particular state (e.g., a booting state, a message state, a charging state, and the like) of the electronic device 1301 or a part (e.g., the processor 1310) of the electronic device 1301. The motor 1398 may convert an electrical signal into mechanical vibration, and may generate vibration, a haptic effect, and the like. Although not illustrated, the electronic device 1301 may include a processing unit (e.g., a GPU) for supporting a mobile TV. The processing unit for supporting mobile TV may, for example, process media data according to a certain standard, such as digital multimedia broadcasting (DMB), digital video broadcasting (DVB), or mediaFLO^{™}.

Each of the components of the electronic device according to the present disclosure may be implemented by one or more components, and the name of the corresponding component may vary depending on the type of the electronic device. The electronic device according to various examples of the present disclosure may include at least one of the aforementioned elements. Some elements may be omitted or other additional elements may be further included in the electronic device. In addition, some of the hardware components according to various examples may be combined into one entity, which may perform functions identical to those of the relevant components before the combination.

The term "module," as used herein may represent, for example, a unit including a combination of one or two or more of hardware, software, or firmware. The "module" may be, for example, used interchangeably with the terms "unit", "logic", "logical block", "component", or "circuit" etc. The "module" may be the minimum unit of an integrally constructed component or a part thereof. The "module" may be also the minimum unit performing one or more functions or a part thereof. The "module" may be implemented mechanically or electronically. For example, the "module" may include at least one of an application-specific integrated circuit (ASIC) chip, Field - Programmable Gate Arrays (FPGAs) and a programmable-logic device performing some operations known to the art or to be developed in the future.

At least a part of an apparatus (e.g., modules or functions thereof) or method (e.g., operations) according to the present disclosure may be, for example, implemented as instructions stored in a computer-readable storage medium in a form of a programming module. In case that the instruction is executed by a processor (e.g., processor 120), and the processor may perform functions corresponding to the instructions. The computer-readable storage media may be the memory 130, for instance.

The computer-readable recording medium may include a hard disk, a floppy disk, and a magnetic medium (e.g., a magnetic tape), an optical medium (e.g., a Compact Disc - Read Only Memory (CD-ROM) and a Digital Versatile Disc (DVD)), a Magneto-Optical Medium (e.g., a floptical disk), and a hardware device (e.g., a Read Only Memory (ROM), a Random Access Memory (RAM), a flash memory, etc.). Also, the program instruction may include not only a mechanical language code such as a code made by a compiler but also a high-level language code executable by a computer using an interpreter, etc. The aforementioned hardware device may be constructed to operate as one or more software modules in order to perform operations of the present disclosure, and vice versa.

The module or programming module according to the present disclosure may include at least one or more of the aforementioned constituent elements, or omit some of the aforementioned constituent elements, or further include additional other constituent elements. Operations carried out by the module, the programming module or the other constituent elements according to the present disclosure may be executed in a sequential, parallel, repeated or heuristic method. Also, some operations may be executed in different order or may be omitted, or other operations may be added.

## Claims

1. An electronic device (10) comprising:
a first electronic device (100) which comprises a first inner surface (100a), a first outer surface (100b), and first side surfaces disposed between the first inner and outer surfaces;
a second electronic device (110) which comprises a second inner surface (110b), a second outer surface (110a), and second side surfaces disposed between the second inner and outer surfaces; and
a connecting portion (120) which connects the first and second electronic devices,
wherein the second electronic device comprises a folding portion (130) in parallel with the connecting portion, and is folded or unfolded on the first electronic device, and
wherein the folding portion comprises a plurality of folding members (231),
**characterised in that**:
the second electronic device further comprises at least one elastic body (740) that penetrates the plurality of folding members (731),
wherein the at least one elastic body is used for providing an additional folding force or unfolding force on the second electronic device when an initial force above a predetermined level to fold or unfold the second electronic device on the first electronic device is provided by a user, such that the remaining deformation to fold or unfold the second electronic device is performed automatically without any further force applied by the user; and
wherein the at least one elastic body comprises at least one roll spring, wherein the roll spring has a curvature shaped section in a direction parallel to the folding portion, and wherein the roll spring is moveable between a first position in which the roll spring is disposed substantially flat and provides the folding force of the second electronic device, and a second position wherein the roll spring is disposed substantially in a rolled shape and provides the unfolding force of the second electronic device.

2. The electronic device of claim 1, wherein the second electronic device (110) comprises a display (111) on the second inner surface (110b), the folding portion (130) is disposed in part of a display periphery, and
a plurality of ports (P1, P2, P3) is disposed side by side, on a side surface (110c) at the back, among the second electronic device side surfaces.

3. The electronic device of claim 1, wherein each of the plurality of folding members (231) comprises a metallic material,
wherein each of the plurality of folding members further comprises a fixing pin (1107) that is inserted into a space provided between locking protrusions (1104a) of the plurality of folding members, and
wherein each of the plurality of folding members is rotatably coupled by the fixing pin.

4. The electronic device of claim 1, wherein the at least one elastic body (740) comprises a metallic plate.

5. The electronic device of claim 1, wherein each of the plurality of folding members (731) further comprises a first opening (806) which a flexible printed circuit board penetrates and a second opening (805) which the at least one elastic body (740) penetrates.

6. The electronic device of claim 1, wherein the at least one elastic body (740) is disposed at a right angle to a disposition direction of the folding portion (530).

7. The electronic device of claim 1, wherein each of the plurality of folding members (731) further comprises at least one stopper (803) and at least one groove (807), and
wherein a rotation of the first folding member is restricted by coupling at least one stopper of the first folding member with at least one groove of the second folding member.

## Patentansprüche

1. Elektronische Vorrichtung (10), umfassend:
eine erste elektronische Vorrichtung (100), die eine erste Innenfläche (100a), eine erste Außenfläche (100b) und zwischen der ersten Innenfläche und der ersten Außenfläche angeordnete erste Seitenflächen umfasst;
eine zweite elektronische Vorrichtung (110), die eine zweite Innenfläche (110b), eine zweite Außenfläche (110a) und zwischen der zweiten Innenfläche und der zweiten Außenfläche angeordnete zweite Seitenflächen umfasst, und
einen Verbindungsabschnitt (120), der die erste und die zweite elektronische Vorrichtung verbindet, wobei die zweite elektronische Vorrichtung einen Faltabschnitt (130) parallel zu dem Verbindungsabschnitt umfasst und auf der ersten elektronischen Vorrichtung gefaltet oder entfaltet wird, und
wobei der Faltabschnitt eine Vielzahl von Faltelementen (231) umfasst, **dadurch gekennzeichnet, dass**:
die zweite elektronische Vorrichtung ferner mindestens einen elastischen Körper (740) umfasst, der in die Vielzahl von Faltelementen (731) eindringt,
wobei der mindestens eine elastische Körper zum Ausüben einer zusätzlichen Faltkraft oder Entfaltungskraft auf die zweite elektronische Vorrichtung verwendet wird, sobald eine über einer vorbestimmten Höhe liegende anfängliche Kraft zum Falten oder Entfalten der zweiten elektronischen Vorrichtung auf der ersten elektronischen Vorrichtung durch einen Benutzer ausgeübt wird, sodass die verbleibende Verformung zum Falten oder Entfalten der zweiten elektronischen Vorrichtung automatisch ohne eine weitere durch den Benutzer aufgewendete Kraft durchgeführt wird, und
wobei der mindestens eine elastische Körper mindestens eine Konstantkraftfeder umfasst, wobei die Konstantkraftfeder einen gekrümmten Abschnitt in einer Richtung parallel zu dem Faltabschnitt aufweist, und wobei die Konstantkraftfeder zwischen einer ersten Position, in der die Konstantkraftfeder im Wesentlichen flach angeordnet ist und die Faltkraft der zweiten elektronischen Vorrichtung liefert, und einer zweiten Position, in der die Konstantkraftfeder im Wesentlichen in einer gerollten Form angeordnet ist und die Entfaltungskraft der zweiten elektronischen Vorrichtung liefert, beweglich ist.

2. Elektronische Vorrichtung nach Anspruch 1, wobei die zweite elektronische Vorrichtung (110) eine Anzeige (111) auf der zweiten Innenfläche (110b) umfasst, der Faltabschnitt (130) in einem Teil eines Anzeigeumfangs angeordnet ist, und
eine Vielzahl von Anschlüssen (P1, P2, P3) nebeneinander auf einer Seitenfläche (110c) auf der Rückseite bei den Seitenflächen der zweiten elektronischen Vorrichtung angeordnet ist.

3. Elektronische Vorrichtung nach Anspruch 1, wobei jedes der Vielzahl von Faltelementen (231) ein metallisches Material umfasst,
wobei jedes der Vielzahl von Faltelementen ferner einen Befestigungsstift (1107) umfasst, der in einen zwischen Verriegelungsvorsprüngen (1104a) der Vielzahl von Faltelementen vorgesehenen Raum eingesetzt wird, und
wobei jedes der Vielzahl von Faltelementen durch den Befestigungsstift drehbar gekoppelt ist.

4. Elektronische Vorrichtung nach Anspruch 1, wobei der mindestens eine elastische Körper (740) eine Metallplatte umfasst.

5. Elektronische Vorrichtung nach Anspruch 1, wobei jedes der Vielzahl von Faltelementen (731) ferner eine erste Öffnung (806) umfasst, in die eine biegsame Leiterplatte eindringt, und eine zweite Öffnung (805) umfasst, in die der mindestens eine elastische Körper (740) eindringt.

6. Elektronische Vorrichtung nach Anspruch 1, wobei der mindestens eine elastische Körper (740) rechtwinklig zu einer Anordnungsrichtung des Faltabschnitts (530) angeordnet ist.

7. Elektronische Vorrichtung nach Anspruch 1, wobei jedes der Vielzahl von Faltelementen (731) ferner mindestens einen Anschlag (803) und mindestens eine Nut (807) aufweist, und wobei eine Drehung des ersten Faltelements durch Kopplung mindestens eines Anschlags des ersten Faltelements mit mindestens einer Nut des zweiten Faltelements begrenzt wird.

## Revendications

1. Dispositif électronique (10) comprenant :
un premier dispositif électronique (100) qui comprend une première surface interne (100a), une première surface externe (100b) et des premières surfaces latérales disposées entre les premières surfaces interne et externe ;
un second dispositif électronique (110) qui comprend une seconde surface interne (110b), une seconde surface externe (110a) et des secondes surfaces latérales disposées entre les secondes surfaces interne et externe ; et
une partie de liaison (120) qui lie les premier et second dispositifs électroniques, ledit second dispositif électronique comprenant une partie de pliage (130) parallèle à la partie de liaison, et étant plié ou déplié sur le premier dispositif électronique, et
ladite partie de pliage comprenant une pluralité d'éléments de pliage (231), **caractérisé en ce que** :
le second dispositif électronique comprend en outre au moins un corps élastique (740) qui pénètre dans la pluralité d'éléments de pliage (731),
ledit au moins un corps élastique étant utilisé pour fournir une force de pliage ou une force de dépliage supplémentaire sur le second dispositif électronique lorsqu'une force initiale supérieure à un niveau prédéfini pour plier ou déplier le second dispositif électronique sur le premier dispositif électronique est fournie par un utilisateur, de sorte que la déformation restante pour plier ou déplier le second dispositif électronique soit effectuée automatiquement sans qu'aucune force supplémentaire ne soit appliquée par l'utilisateur ; et
ledit au moins un corps élastique comprenant au moins un ressort en spirale, ledit ressort en spirale comportant une section en forme de courbure dans une direction parallèle à la partie de pliage, et ledit ressort en spirale étant mobile entre une première position dans laquelle le ressort en spirale est disposé sensiblement plat et fournissant la force de pliage du second dispositif électronique, et une seconde position ledit ressort en spirale étant disposé sensiblement sous une forme enroulée et fournissant la force de dépliage du second dispositif électronique.

2. Dispositif électronique selon la revendication 1, ledit second dispositif électronique (110) comprenant un dispositif d'affichage (111) sur la seconde surface interne (110b), ladite partie de pliage (130) étant disposée dans une partie d'une périphérie de dispositif d'affichage, et
une pluralité de ports (P1, P2, P3) étant disposés côte à côte, sur une surface latérale (110c) à l'arrière, parmi les secondes surfaces latérales de dispositif électronique.

3. Dispositif électronique selon la revendication 1, chacun de la pluralité d'éléments de pliage (231) comprenant un matériau métallique,
chacun de la pluralité d'éléments de pliage comprenant en outre une goupille de fixation (1107) qui est insérée dans un espace prévu entre les saillies de verrouillage (1104a) de la pluralité d'éléments de pliage, et
chacun de la pluralité d'éléments de pliage étant couplé de manière rotative par la goupille de fixation.

4. Dispositif électronique selon la revendication 1, ledit au moins un corps élastique (740) comprenant une plaque métallique.

5. Dispositif électronique selon la revendication 1, chacun de la pluralité d'éléments de pliage (731) comprenant en outre une première ouverture (806) dans laquelle une carte de circuit imprimé flexible pénètre et une seconde ouverture (805) dans laquelle le au moins un corps élastique (740) pénètre.

6. Dispositif électronique selon la revendication 1, ledit au moins un corps élastique (740) étant disposé à angle droit par rapport à une direction de disposition de la partie de pliage (530).

7. Dispositif électronique selon la revendication 1, chacun de la pluralité d'éléments de pliage (731) comprenant en outre au moins une butée (803) et au moins une rainure (807), et
une rotation du premier élément de pliage étant limitée en couplant au moins une butée du premier élément de pliage avec au moins une rainure du second élément de pliage.
